# EUROPEAN PATENT SPECIFICATION

(11) **EP 3 649 215 B1**
(45) Date of publication and mention of the grant of the patent: **11.01.2023**
(21) Application number: 18832943.7
(22) Date of filing: 11.07.2018
(51) Int. Cl.: C09K 17/32, C09K 101/00, A01B 79/02

(54) **RECLAMATION OF SANDY SOILS UNDER DIFFICULT CLIMATIC CONDITIONS**
RÜCKGEWINNUNG VON SANDIGEN BÖDEN UNTER ERSCHWERTEN KLIMATISCHEN BEDINGUNGEN
VALORISATION DE SOLS SABLONNEUX DANS DES CONDITIONS CLIMATIQUES DIFFICILES

(30) Priority: 14.07.2017 CZ 20170406
(43) Date of publication of application: 13.05.2020
(73) Proprietor: MANEKO, spol. s r.o., 16000 Praha 6 (CZ)
(72) Inventor: SCHULMANN, Jan, 16000 Praha 6 - Suchdol (CZ)
(74) Representative: Kratochvil, Vaclav
(86) International application number: PCT/IB2018/055120
(87) International publication number: WO 2019/012452

(56) References cited:
- WO-A1-2014/091279
- CN-A- 1 445 335
- CN-A- 1 994 047
- CN-A- 107 371 432
- CS-A1- 940 884
- CS-A3- 655 690
- CZ-B6- 305 666
- CZ-B6- 305 666
- JP-B2- 3 609 396
- RU-A- 94 024 076
- RU-C1- 2 162 875
- M. T. DE MELO CARVALHO ET AL: "Biochar increases plant-available water in a sandy loam soil under an aerobic rice crop system", SOLID EARTH, vol. 5, no. 2, 1 January 2014 (2014-01-01) , pages 939-952, XP055565379, DOI: 10.5194/se-5-939-2014
- FRED BOYE: "Agricultural Chemicals", UTILIZATION OF LIGNINS AND LIGNIN DERIVATIVES,, 1 January 1974 (1974-01-01), XP001280770,
- JUDY A LIBRA ET AL: "Hydrothermal carbonization of biomass residuals: a comparative review of the chemistry, processes and applications of wet and dry pyrolysis", BIOFUELS, vol. 2, no. 1, 1 January 2011 (2011-01-01) , pages 89-124, XP055055468, ISSN: 1759-7269, DOI: 10.4155/bfs.10.81
- DE MELO CARVALHO M.T. et al.: "Biochar increases plant-available water in a sandy loam soil under an aerobic rice crop system", Solid Earth, vol. 5, no. 2 3 September 2014 (2014-09-03), pages 939-952, XP055565379, ISSN: 1869-9510 Retrieved from the Internet: URL:https://doi.org/10.5194/se-5-939-2014

## Description

### Technical field

The invention is related to the reclamation of sandy soils under difficult climatic conditions.

### Background of the invention

Sandy soils, occurring in the Middle East and in similar areas, have insufficient organic matter content. They are therefore not able adequately retain water, they are not biologically active and cultivated plants thus cannot sufficiently make use of added fertilizers. Plant life is therefore usually short, vegetation has to be renewed, long-term growth sustainability is a target difficult to achieve, which hinders gradual secondary improvement of soil quality. The situation is of course exacerbated by adverse weather conditions, i.e. high average temperatures and lack of rainfall, which require extreme irrigation costs. These facts apply to basic grassing, carpet grassing and other grassing technologies as well as to other types of plants or crops.

During pulp production, wood is processed through acid hydrolysis to form pulp and lignin based wastes in the form of lignosulfonates which are water soluble. These lignosulfonates are used to improve the soil quality for planting of plants, as disclosed for instance in CN 1445335 Patent or Russian Patent 2162875.

Patent CN 1445335 describes the material obtained as waste from sulfate paper production. This waste which contains the water soluble lignosulfonate is, according to the invention, further neutralized and treated with formaldehyde or acetaldehyde and then treated with urea and hexamethylenetetramine or with borax at temperatures of 50-160 °C. This lignin based material is sprayed onto sand to stabilize it and to reduce ground water evaporation. Spraying increases organic matter content in sand which is then microbialy degraded improving soil quality and plant growth.

Furthermore known Russian Patent 2162875 describes mulching with a special substrate at a thickness of 5 cm after the planting of the forest trees. This special substrate is obtained through calcium compounds neutralization of hydrolysed lignin.

However its agrotechnology use is also limited in terms of land reclamation because it is washed out from the soil by irrigation and rainfall due to its solubility in water.

In Solid Earth Vol. 5, No 2,pp. 939-952, ISSN:1869-9529,16.9.2014 Melo Carvalho M.T.end col. describe that biochar increases plant - available water in a sandy loam soil under an aerobic rice crop system. The applied biochar was a by-product of a slow pyrolysis by temperatures about 450 °C. The biochar was incorporated into the upper 5 to 20 cm of the soil.

Patent CZ 305666 describes formulation for support of growth off higher plants based on application biochar in combination with biomass of cultured microorganisms end/or mykorhiza fungi end/or fertilizers and/or hydrocolloids. For the preparation of biochar uses phytomass, for example wood, straw, hay, waste phytomass from the food industry heated in an induction heating reactor to a temperature in the range of 300 to 600 °C for a period of 2 to 5 hours or by mans of magnetrons in combination with sight glasses of sapphire glass for access of microwaves to the phytomass at a temperature in the range of 800 to 1400 °C.

Moreover, described waste materials differ substantially in the actual components content.

Wood mass is a lignocellulose and hemicellulose complex in which lignin provides wood cell walling and forms roughly a third of the wood weight. Lignin is the second most common compound on the Earth, forming about 25% of the plant biomass, and the largest amount of it is found in the lignified walls of the plant cells. Lignin has a hydrophobic function in woody plant organisms, it connects the intercellular fibers and thus strengthens the cellulosic molecules within the cell walls. Lignin lacks a regular structure; it is a mixture of physically and chemically heterogeneous substances, more precisely a mixture of high molecular weight polyphenolic amorphous substances and its synthesis takes place directly in the cell wall, the basic building unit being phenylpropanoids, especially p-coumaryl alcohol, coniferyl alcohol and sinepyl alcohol, covalently bound to polysaccharides. Wood mass is a renewable energy source. It has long since been used for the production of charcoal, which is produced by heating wood without air supply at a temperature from 450 to 550 °C. Gasification and carbonization of the lignocellulosic complex forming carbon monoxide and carbon dioxide, methane, liquids and charcoal take place.

Wood dry distillation technology has been widely used to produce methanol based aviation fuel until recently. By heating the wood without air supply at a temperature from 270 to 300 °C, only depolymerization of the lignocellulosic complex is accomplished and breakdown of the methanol groups to form methanol, acetone and waste. This waste is comprised of phenylpropanoid derivatives already free of alcohol groups. The derivatives are bound to partially depolymerized and carbonized cellulose. The waste comprises residual methyl alcohol. This waste, which we will continue to refer to as a depolymerized residue from dry distillation of the wood at a temperature of up to 300 °C, has a very fine granulometry and is insoluble in water. In the past, it was produced in tens of millions of tons. It represents an ecological problem which has not been solved so far because attempts to increase its heating capacity (torefaction) for production of fuel pellets have not been successful up to now, namely compared to the calorific value and use of charcoal.

### Summary of the invention

Reclamation of sandy soils under difficult climatic conditions is based on enrichment of the sandy soil layer 10 to 30 cm deep with 10 to 40 wt% of a depolymerized residue from dry distillation of the wood at a temperature of up to 300 °C, related to the weight of the mixture with sandy soil.

Advantageously, 5 to 25 wt% of at least one substance selected from the group consisting of compost, organic fertilizer, inorganic fertilizers, minerals, bacterial cultures of aerobic microorganisms, bacterial nutrients based on carbohydrates, cellulase and amylase may be added, related to the weight of the mixture with sandy soil.

The addition of enzymes (cellulases, amylases) helps aerobic bacteria to decompose cellulose residues bound in the depolymerized residue from dry distillation of the wood at a temperature of up to 300 °C into carbohydrates that are easier to process for bacteria. Bacterial cultures are important for the formation of humus substances which are then crucial for plant growth and soil moisture.

Advantageously, the depolymerized residue from dry distillation of the wood at a temperature of up to 300 °C is ploughed with the help of conventional agricultural mechanization into a 10 to 30 cm deep layer of sandy soil, or the sandy soil surface is overlaid with a 10 to 30 cm thick layer of the mixture of sandy soil with 10 to 40 wt% of the depolymerized residue from dry distillation of the wood at a temperature of up to 300 °C.

Advantageously, the sandy soil layer 10 to 30 deep is enriched with a premix comprising the depolymerized residue from dry distillation of the wood at a temperature of up to 300 °C and a maximum of 70 wt% of at least one substance selected from the group consisting of compost, organic fertilizer, inorganic fertilizers, bacterial cultures, nutrients or enzymes is prepared, related to the weight of the premix, which is ploughed by conventional agricultural mechanization into a 10 to 30 cm deep layer of sandy soil in an amount corresponding 10 to 40 wt%. of the depolymerized residue from dry distillation of wood at a temperature of up to 300 ° C in the mixture with sandy soil.

According to the invention, a sandy soil reclamation premix is provided in accordance with claim 6.

The depolymerized residue from dry distillation of the wood at a temperature of up to 300 °C has a very fine granulometry and is water insoluble and has a high sorption capacity.

The depolymerized residue from dry distillation of the wood at a temperature of up to 300 °C was subjected to an water saturation.

Firstly original material from dry distillation of the wood at a temperature of up to 300 °C was subjected to the water absorption test. Secondly the same material dried after the first water saturation was tested.

Standard water source was used for the test, water temperature t = 21.5-22.0 °C, and at laboratory temperature the material was saturated with water in a weight ratio of material:water 1:5 and 1:3.3 and sealed in a PE bottle.

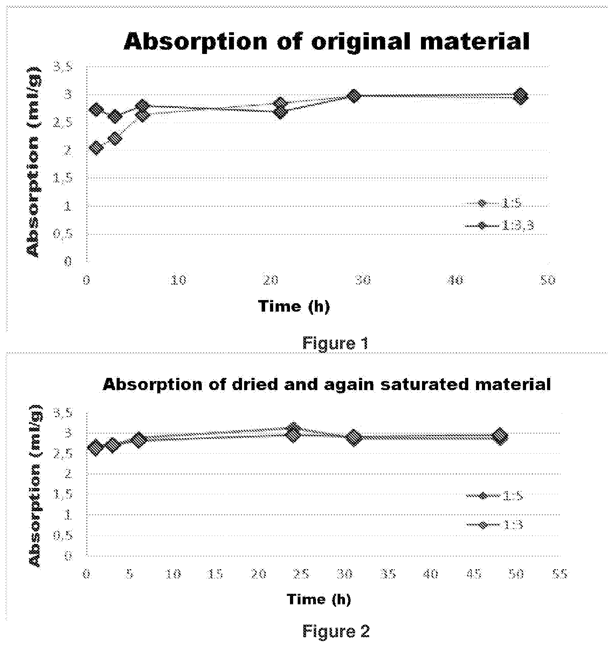

Samples were then taken to measure the amount of not soaked water. After approximately 8 hours, in both samples the ratio of saturated water ranged from 2.7 to 2.8 ml/g of material. After 30 hours, it stabilized at 3 ml/g (see Figure 1).

Then the dried material was saturated again with water in a weight ratio of 1:5 and 1:3. The course of water saturation was similar (see Figure 2).

The water evaporation was monitored at 25 °C and 40 °C.

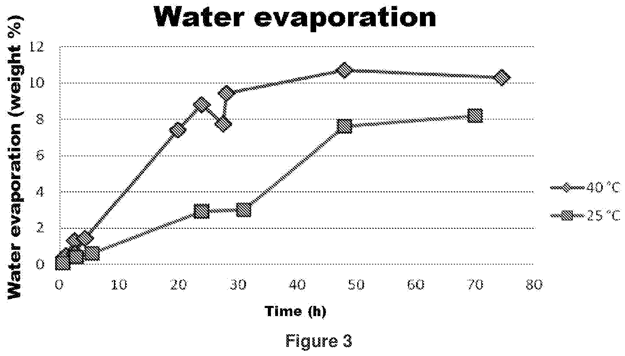

After 30 hours, two 7-g samples of water saturated material were taken into open vials. A weight loss of 8 wt% (76 mg of water per 1 g of sorbent material) at 25 °C and 11 wt% (110 mg of water per 1 g of sorbent material) at 40 °C was observed (see Figure 3). After 50 hours, no further evaporation occurred.

The key components of the above described the depolymerized residue from dry distillation of the wood at a temperature of up to 300 °C are water insoluble and their effect when incorporated into the soil is therefore permanent. They are able to absorb water up to three times their weight. The loss of water by evaporation at 40 °C from a water saturated the depolymerized residue from dry distillation of the wood at a temperature of up to 300 °C is negligible.

This is especially important for reclamation of sandy soils under difficult climatic conditions. Sandy soils occurring in the Middle East and similar areas do not contain sufficient quantity of organic matter, therefore they do not adequately retain water, they are not biologically active, and cultivated plants cannot make use of added fertilizers properly. As a rule, plant life is short, crops have to be replanted, their sustainability appears to be a target hard to achieve and makes gradual secondary improvement of the soil quality difficult. Naturally, the situation is aggravated due to unfavorable climatic conditions, i.e. high average temperatures and lack of rainfall, requiring extreme irrigation costs. These facts apply to basic grassing, carpet grassing and other grassing technologies as well as to other types of plants or crops.

The depolymerized residue from dry distillation of the wood at a temperature of up to 300 °C is a hydrophobic organic mass that allows the relative humidity to be maintained in the mixture and in principle to reduce water consumption when irrigation is required. Methyl alcohol residues and alcohol free phenylpropanoid derivatives coupled to partially depolymerized and carbonized cellulose are readily available nutrients for bacteria living on the plant root system, promoting their proliferation and a gradual increase in humic acid content. Humic acids are the basic soil-to-plant carrier of nutrients that in qualitatively higher soil types are an active ingredient of humus, and the process described can therefore be considered as plant growth stimulating. Methyl alcohol residues and phenylpropanoid derivatives coupled to partially depolymerized and carbonized cellulose also help plants better to resist the negative effects of saline soils and tolerate the residual salt content in irrigation systems based on desalinated seawater.

The mixture of the depolymerized residue from dry distillation of the wood at a temperature of up to 300 °C with sandy soil can be prepared and applied at the required thickness of the layer (usually up to 30 cm) on the selected area or the depolymerized residue from dry distillation of the wood at a temperature of up to 300 °C can be ploughed into the sandy soil directly on the reclaimed area by conventional agricultural mechanization. Of course suitable organic substrates, compost or organic fertilizers can be added to the mixture and the input parameters can be adjusted by the addition of industrial fertilizers and minerals, or bacterial cultures, bacterial nutrients and enzymes, as the case may be, either to premixes or to the reclaimed area.

At this layer of sandy soil and the depolymerized residue from dry distillation of the wood at a temperature of up to 300 °C and optionally other substances of the invention, cultivated crops starting with grass can better manage the nutrients supplied and consume considerably less water from irrigation at the same time. The amount of water required for irrigation is reduced by up to 20%. Plants have a multi-year lifespan, which gradually leads to a higher organic matter content in the soil and a qualitative improvement in the structure of the cultivated land.

### Examples

1. An area of 10 m² of sandy soil was overlaid with a 10 cm thick layer of the mixture of 30 wt% the depolymerized residue from dry distillation of the wood at a temperature of up to 300 °C with 70 wt% of the same sandy soil, and covered with a grass carpet. On the adjacent sandy soil area of 10 m², the same grass carpet was laid as a control experiment. For both areas, climatic conditions corresponding to the Middle East were simulated. Both beds were fertilized identically. The control grass carpet gradually withered, while grass grown on the mixture maintained the required characteristics when irrigation water consumption was 17% lower.
2. An area of 10 m² of sandy soil was overlaid with a 10 cm thick layer of the mixture of 30 wt% the depolymerized residue from dry distillation of the wood at a temperature of up to 300 °C with 68 wt% of the same sandy soil enriched with bacterial culture of aerobic microorganisms, cultured from cattle slurry, and supplemented with 2 wt% bacterial nutrient - waste from dried beet pulp production. This area was covered with a grass carpet. On the adjacent sandy soil area of 10 m², the same grass carpet was laid as a control experiment. For both areas, climatic conditions corresponding to the Middle East were simulated. Both beds were fertilized identically. The control grass carpet gradually withered, while grass grown on the mixture maintained the required characteristics when irrigation water consumption was 20% lower
3. An area of 10 m² of sandy soil was overlaid with a 20 cm thick layer of the mixture of 20 wt% the depolymerized residue from dry distillation of the wood at a temperature of up to 300 °C with 20 wt% compost and 60 wt% of the same sandy soil, and the adjacent 10 m² sandy soil area was used as a control experiment. Both areas were sown with *Melissa officinalis,* which generally requires a sunny place. And for both areas, the same Middle East climatic conditions were simulated again. Both beds were fertilized identically. On the control bed, Melissa did not survive an annual cycle and the quality of the crop was low, while on the mixture with sandy soil, treated according to the invention, it managed to complete the annual cycle without problems when irrigation water consumption was 15% lower.
4. An area of 10 m² of sandy soil was overlaid with a 30 cm thick layer of the mixture of 20 wt% the depolymerized residue from dry distillation of the wood at a temperature of up to 300 °C with 20 wt% of organic fertilizer and 60 wt% of the same sandy soil, and the adjacent 10 m² sandy soil area was used as a control experiment. Both areas were sown with wheat. For both areas, Middle East climatic conditions were simulated again. The control bed was adequately fertilized with industrial fertilizer. The yield on the mixture with sandy soil was 19% higher than that on the control bed when irrigation water consumption was 15% lower.
5. On an area of 10 m² of sandy soil, 1920 kg of a premix containing 50 wt% of the depolymerized residue from dry distillation of the wood at a temperature of up to 300 °C and 50 wt% of organic fertilizer containing 1.5 wt% nitrogen was ploughed into a 30 cm deep layer. The adjacent 10 m² sandy soil area was used as a control experiment. Both areas were sown with wheat and the same climatic conditions were simulated again. The control bed was adequately fertilized with industrial fertilizer. The yield on the mixture with sandy soil was 25% higher than that on the control area when irrigation water consumption was 15% lower.

### Industrial use

This invention is applicable in agriculture for sandy soils reclamation.

## Claims

1. Reclamation of sandy soils under difficult climatic conditions **characterized in that** the sandy soil layer 10 to 30 cm deep is enriched with 10 to 40 wt% of depolymerized residue from dry distillation of wood at a temperature of up to 300 °C, related to the weight of the mixture with sandy soil.

2. Reclamation according to claim 1, **characterized in that** the layer of the mixture of sandy soil with the depolymerized residue from dry distillation of wood at a temperature of up to 300 °C is further enriched with 5 to 25 wt% by at least one substance selected from the group consisted of compost, organic fertilizer, inorganic fertilizers, minerals, bacterial cultures of aerobic microorganisms, carbohydrate based bacterial nutrients, cellulase and amylase, related to the weight of the mixture with sandy soil.

3. Reclamation according to claim 1, **characterized in that** the depolymerized residue from dry distillation of wood at a temperature of up to 300 °C is ploughed into a 10 to 30 cm layer of sandy soil by conventional agricultural mechanization.

4. Reclamation according to claim 1, **characterized in that** the sandy soil surface is overlaid with a 10 to 30 cm thick layer of the mixture of sandy soil with 10 to 40 wt% of the depolymerized residue from dry distillation of wood at a temperature of up to 300 °C, related to the weight of the mixture with sandy soil.

5. Reclamation according to claims 1 and 3, **characterized in that** the sandy soil layer 10 to 30 cm deep is enriched with a premix comprising the depolymerized residue from dry distillation of wood at a temperature of up to 300 °C and a maximum of 70 wt% of at least one substance selected from the group consisted of compost, organic fertilizer, inorganic fertilizers, bacterial cultures, nutrients or enzymes is prepared, related to the weight of the premix, which is ploughed into a 10 to 30 cm layer of sandy soil by conventional agricultural mechanization in an amount corresponding to 10 to 40 wt%. of the depolymerized residue from dry distillation of wood at a temperature of up to 300 °C in the mixture with sandy soil.

6. A premix for reclamation of sandy soils according to claim 1, **characterized in that** it comprises the depolymerized residue from dry distillation of wood at a temperature of up to 300 °C and a maximum of 70 wt% of at least one substance selected from the group consisted of compost, organic fertilizer, inorganic fertilizers, bacterial cultures, nutrients or enzymes, related to the weight of the premix and this premix is mixed into 10 to 30 cm layer of sandy soil in an amount which enriches this layer of sandy soil with 10 to 40 wt% of the depolymerized residue from dry distillation of wood at a temperature of up to 300 °C.

## Patentansprüche

1. Rekultivierung von Sandböden unter schwierigen klimatischen Bedingungen, **gekennzeichnet dadurch, dass** die Sandbodenschicht bis zu einer Tiefe von 10 bis 30 cm mit 10 bis 40 % Gew. des depolymerisierten Rückstands nach Trockendestillation von Holz bei einer Temperatur von bis zu 300 °C angereichert wird, bezogen auf das Gewicht des Gemischs mit Sand.

2. Rekultivierung nach Anspruch 1 **gekennzeichnet dadurch, dass** die Schicht aus einem Gemisch aus sandigem Boden und depolymerisiertem Rückstand nach Trockendestillation von Holz bei einer Temperatur von bis zu 300 °C weiter mit 5 bis 25 % Gew. mindestens eines Stoffes aus der ausgewählten Gruppe angereichert wird, die aus Kompost, organischem Dünger, anorganischen Düngern, Mineralstoffen, Bakterienkulturen aerober Mikroorganismen, Bakteriennährstoffen auf Basis von Kohlenhydraten, Cellulase und Amylase besteht, bezogen auf das Gewicht des Gemischs mit Sand.

3. Rekultivierung nach Anspruch 1 **gekennzeichnet dadurch, dass** der depolymerisierte Rückstand nach Trockendestillation von Holz bei einer Temperatur von bis zu 300 °C in 10 bis 30 cm der Sandbodenschicht durch konventionelle landwirtschaftliche Mechanisierung eingearbeitet wird.

4. Rekultivierung nach Anspruch 1 **gekennzeichnet dadurch, dass** die sandige Oberfläche mit einer 10 bis 30 cm dicken Schicht Sandmischung mit 10 bis 40 % Gew. des depolymerisierten Rückstands nach Trockendestillation von Holz bei einer Temperatur von bis zu 300 °C bedeckt wird, bezogen auf das Gewicht des Gemischs mit Sand.

5. Rekultivierung nach den Ansprüchen 1 und 3 **gekennzeichnet dadurch, dass** die Sandbodenschicht bis zu einer Tiefe von 10 bis 30 cm mit einem Premix angereichert wird, bestehend aus depolymerisiertem Rückstand nach Trockendestillation von Holz bei einer Temperatur von bis zu 300 °C und maximal 70 % Gew. mindestens eines Stoffes aus der Gruppe, die aus Kompost, organischem Dünger, anorganischen Düngern, Bakterienkulturen, Nährstoffen oder Enzymen besteht, bezogen auf das Gewicht des Premix, der in eine 10 bis 30 cm dicke Sandbodenschicht in einer Menge entsprechend 10 bis 40 % Gew. des depolymerisierten Rückstands nach Trockendestillation von Holz bei einer Temperatur von bis zu 300 °C in einer Mischung aus Sandboden eingearbeitet wird.

6. Premix zur Rekultivierung von Sandböden nach Anspruch 1 **gekennzeichnet dadurch, dass** er einen depolymerisierten Rückstand nach Trockendestillation von Holz bei einer Temperatur von bis zu 300 °C und maximal 70 % Gew. mindestens eines Stoffes aus der Gruppe umfasst, die aus Kompost, organischem Dünger, anorganischen Düngern, Bakterienkulturen, Nährstoffen oder Enzymen besteht, bezogen auf das Gewicht des Premix, und dieser Premix wird in eine 10 bis 30 cm dicke Sandbodenschicht in einer Menge eingemischt, die diese Sandbodenschicht mit 10 bis 40 % Gew. des depolymerisierten Rückstands nach Trockendestillation von Holz bei einer Temperatur von bis zu 300 °C anreichert.

## Revendications

1. Remise en culture des terres sablonneuses dans des conditions climatiques difficiles **caractérisées en ce que** la couche de terre sablonneuse sera enrichie sur une épaisseur de 10 à 30 cm de 10 à 40 % d'un résidu dépolymérisé après la distillation sèche du bois à une température jusqu'à 300 °C, par rapport au poids du mélange avec du sable.

2. Remise en culture selon la revendication 1 **caractérisée en ce que** la couche du mélange de terre sablonneuse et du résidu dépolymérisé après la distillation sèche du bois à une température jusqu'à 300 °C sera enrichie de 5 à 25 % en poids d'au moins une substance choisie dans le groupe composé de compost, d'engrais organique, d'engrais inorganiques, de substances minérales, de cultures bactériennes de micro-organismes aérobies, de nutriments bactériens à base de glucides, de cellulase et d'amylase, par rapport au poids du mélange avec du sable.

3. Remise en culture selon la revendication 1 **caractérisée en ce que** le résidu dépolymérisé après la distillation sèche à une température jusqu'à 300 °C sera introduit par une mécanisation agricole ordinaire dans la couche de terre sablonneuse de 10 à 30 cm.

4. Remise en culture selon la revendication 1 **caractérisée en ce que** la surface sablonneuse sera recouverte d'une couche de 10 à 30 cm de mélange de sable avec 10 à 40 % en poids du résidu dépolymérisé après la distillation sèche du bois à une température jusqu'à 300 °C par rapport au poids du mélange avec du sable.

5. Remise en culture selon les revendications 1 à 3 **caractérisée en ce que** la couche de terre sablonneuse sera enrichie, jusqu'à une profondeur de 10 à 30 cm, d'un pré mélange contenant le résidu dépolymérisé après la distillation sèche du bois à une température jusqu'à 300 °C et au maximum 70 % en poids d'au moins une substance du groupe constitué de composte, d'engrais organique, d'engrais inorganiques, de cultures bactériennes, de nutriments ou d'enzymes par rapport au poids du pré mélange qui sera incorporé dans une couche de terre sablonneuse de 10 à 30 cm en utilisant une mécanisation agricole ordinaire dans une quantité correspondante à 10 à 40 % en poids du résidu dépolymérisé après la distillation sèche du bois à une température jusqu'à 300 °C dans le mélange avec la terre sablonneuse.

6. Le pré mélange pour la remise en culture des terres sablonneuses selon la revendication 1 **caractérisé en ce qu'**il contient le résidu dépolymérisé après la distillation sèche du bois à une température jusqu'à 300 °C et au maximum 70 % en poids d'au moins une substance choisie dans le groupe composé de composte, d'engrais organique, d'engrais inorganiques, de cultures bactériennes, de nutriments ou d'enzymes par rapport au poids du pré mélange, et ce pré mélange sera ajouté dans la couche de 10 à 30 cm de terre sablonneuse dans une quantité qui enrichira cette couche de terre sablonneuse de 10 à 40 % en poids de résidu dépolymérisé après la distillation sèche du bois à une température jusqu'à 300 °C.
